# FASCICULE DE BREVET EUROPEEN

(11) **EP 2 106 031 B1**
(45) Date de publication et mention de la délivrance du brevet: **13.07.2011**
(21) Numéro de dépôt: 08102940.7
(22) Date de dépôt: 26.03.2008
(51) Int. Cl.: H04B 1/69

(54) **Procédé d'dentification d'une donnée codée par modulation PPM, récepteur pour ce procédé**
Identifizierungsverfahren von durch PPM-Modulation kodierten Daten und Empfänger für dieses Verfahren
Method of identifying data coded by PPM modulation, receiver for this method

(43) Date de publication de la demande: 30.09.2009
(73) Titulaire: Université de Neuchâtel, 2001 Neuchâtel (CH)
(72) Inventeur: Botteron, Cyril, 3238, Gals (CH); Merz, Roman, 2000, Neuchâtel (CH); Farine, Pierre-André, 2000, Neuchâtel (CH)
(74) Mandataire: Richard, François-Régis

(56) Documents cités:
- FR-A- 2 877 169
- BENOIT MISCOPEIN ET AL: "Low Complexity Synchronization Algorithm for Non-Coherent UWB-IR Receivers" VEHICULAR TECHNOLOGY CONFERENCE, 2007. VTC2007-SPRING. IEEE 65TH, IEEE, PI, 1 avril 2007 (2007-04-01), pages 2344-2348, XP031093050 ISBN: 978-1-4244-0266-3

## Description

### Domaine technique

L'invention concerne un procédé d'identification d'une donnée Sk codée par une modulation PPM (Pulse Position Modulation) dans un signal reçu. L'invention concerne également un récepteur d'un tel signal.

### Etat de la technique

Dans une modulation PPM ou modulation temporelle de position d'impulsions, chaque impulsion peut être en avance ou en retard par rapport à un instant d'arrivée connu théorique afin de pouvoir coder une donnée telle que par exemple un « 0 » ou un « 1 ». Dans cette description, le terme « donnée » signifie tout type d'informations, tel qu'un identifiant d'émetteur, un caractère, un symbole, un bit ou autre.

Les modulations PPM englobent également une modulation PPM particulière connue sous le terme de modulation DPPM (Differential Pulse Position Modulation). Dans la modulation DPPM, ce sont les différences entre les instants d'arrivée des impulsions d'une séquence d'impulsions qui codent les données.

Plus précisément, lorsqu'une modulation PPM est utilisée, chaque donnée transmise est définie par une séquence de M impulsions ou de M blocs d'impulsions, où M est un nombre entier strictement supérieur à un. M n'est pas nécessairement le même pour toutes les données codées. L'agencement temporel des M impulsions ou M blocs d'impulsions d'une même séquence représente un codage de la donnée. Les instants Ti successifs d'arrivée de ces impulsions ou blocs d'impulsions codent donc la donnée transmise. Chaque instant d'arrivée Ti est une valeur numérique indiquant un temps écoulé depuis une origine commune.

Lorsque les amplitudes des impulsions sont suffisamment importantes pour permettre de discriminer chacune d'entre elles dans le bruit ambiant, les instants Ti peuvent correspondre aux temps d'arrivée de chacune de ces impulsions. Dans ce cas, la donnée est codée par une séquence de M impulsions. A l'inverse, lorsque les amplitudes des impulsions sont plus faibles que le bruit ambiant, des blocs d'impulsions sont envoyés. L'agencement des impulsions au sein de chacun de ces blocs est prédéterminé pour que le récepteur puisse facilement identifier chacun de ces blocs. Dans ce cas, les instants Ti correspondent aux instants d'arrivée des blocs d'impulsions et la donnée est codée par M blocs d'impulsions.

Les modulations PPM sont utilisées dans les technologies à ultra-large bande plus connues sous le terme de Technologie UWB (Ultra Wide Band). A titre d'illustration uniquement, la description qui suit est faite dans ce contexte particulier.

La transmission des données par une technologie UWB est réalisée à l'aide de signaux de données qui comprennent une série d'impulsions très courtes sans nécessairement l'utilisation d'une fréquence porteuse. La durée de ces impulsions peut être inférieure à une nanoseconde. Comme les impulsions des signaux de données sont très courtes dans le domaine temporel, par transformation dans le domaine fréquentiel, cela conduit à l'obtention d'un spectre à ultra-large bande, ce qui définit la technologie UWB. Le spectre de fréquence peut aller de 500 MHz à plusieurs GHz. La largeur de bande de fréquence par rapport à la fréquence centrale est généralement supérieure à 25 % pour une technologie UWB.

Les impulsions peuvent être de différentes formes pour autant que leurs durées soient généralement inférieures à 1 nanoseconde. Il peut s'agir par exemple d'impulsions de forme gaussienne à une ou deux polarités ou d'ondelettes.

Généralement, plusieurs émetteurs et récepteurs à ultra-large bande peuvent se trouver à proximité les uns des autres. Ainsi, généralement, les signaux transmis entre un émetteur et un récepteur doivent en plus comporter une donnée particulière appelée ici « identifiant d'émetteur », permettant d'identifier l'émetteur qui a transmis le signal reçu.

De plus, tous les codes utilisés pour le codage des données sont en principe orthogonaux. Ce qui signifie qu'en les corrélant les uns avec les autres, le résultat de la corrélation donne une valeur proche de zéro.

Généralement, lorsqu'une modulation PPM est utilisée, l'horloge du récepteur doit être très précisément synchronisée sur l'horloge de l'émetteur afin de pouvoir déterminer avec exactitude si une impulsion est en avance ou en retard par rapport à un instant théorique d'arrivée. Une telle synchronisation de l'horloge du récepteur est souvent complexe à réaliser.

### Divulgation de l'invention

L'invention vise à remédier à cet inconvénient en proposant un procédé, sans synchronisation, d'identification d'une donnée Sk codée par modulation PPM dans un signal reçu.

Elle a donc pour objet un tel procédé comprenant :
a) la construction d'une suite chronologique {T1 ; ... ; Ti ; ... ; TN} d'instants d'arrivée Ti d'impulsions successives contenues dans le signal reçu,
b) le calcul d'une valeur de ressemblance entre cette suite {T1 ; ... ; Ti ; ... ; TN} et une séquence chronologique prédéterminée {TREFk1 ; ... ; TREFkj ; ... ; TREFkM} d'instants d'arrivée codant la donnée Sk pour plusieurs décalages temporels Ol entre la suite {T1 ; ... ; Ti ; ... ; TN} et la séquence {TREFk1 ; ... ; TREFkj ; ... ; TREFkM}, chaque valeur de ressemblance étant établie à partir des écarts entre les couples d'instants (Ti ; TREFkj) de manière à être représentative de la corrélation entre la suite {T1 ; ... ; Ti ; ... ; TN} et la séquence {TREFk1 ; ... ; TREFkj ; ... ; TREFkM} pour un décalage temporel Ol donné,
c) l'identification de la donnée Sk dans la suite {T1 ; ... ; Ti ; ... ; TN} si la valeur de ressemblance calculée pour l'un des décalages temporels Ol franchit un seuil prédéterminé.

La construction de la suite {T1 ; ... ; Ti ; ... ; TN} ne nécessite aucune synchronisation temporelle entre les horloges du récepteur et de l'émetteur. De même, le calcul de la valeur de ressemblance entre la suite {T1 ; ... ; Ti ; ... ; TN} et la séquence {TREFk1 ; ... ; TREFkj ; ... ; TREFkM} pour différents décalages temporels ne nécessite pas non plus une synchronisation des horloges des récepteur et émetteur. Ainsi, à l'aide de ce procédé, la donnée Sk peut être identifiée sans que les horloges des émetteur et récepteur soient synchronisées.

De plus, étant donné que l'on calcule une valeur de ressemblance pour différents décalages temporels possibles, la donnée Sk est identifiée seulement si un seuil prédéterminé est franchi. Grâce à cela, ce procédé s'avère robuste par rapport au bruit. En particulier, ce procédé est robuste par rapport à la présence d'impulsions parasites dans le signal reçu provoquant l'apparition d'instants parasites dans la suite {T1 ; ... ; Ti ; ... ; TN}. De telles impulsions parasites sont par exemple provoquées par des trajets multiples du signal entre l'émetteur et le récepteur ou générées par d'autres émetteurs d'ondes électromagnétiques à proximité de ces émetteur et récepteur.

Le procédé ci-dessus limite également les conséquences des erreurs de mesure des instants d'arrivée Ti. Ces erreurs peuvent se traduire par une mesure d'un instant Ti légèrement en avance ou en retard par rapport au temps où l'impulsion ou le bloc d'impulsions a réellement été reçu par le récepteur. Cette erreur est connue sous le terme anglais de « Jitter ».

Le document intitulé "Low Complexity Synchronisation Algorithm for Non-Cohérent UWB-IR Receivers", publié au nom de Benoît Miscopein et al. lors de la VEHICULAR TECHNOLOGY CONFERENCE, 2007, VTC2007-SPRING, IEEE 65TH, IEEE, PI, pages 2344 à 2348 (ISBN: 978-1-4244-0266-3), et la demande de brevet FR 2 877 169 A, dont des inventeurs ont contribué à la publication ci-dessus, divulguent des procédés similaires, du type qui vient d'être décrit, dans lesquels des calculs d'écarts entre des instants d'arrivée interviennent dans l'identification d'un signal. Chaque écart est calculé entre deux instants d'arrivée successifs, ce qui permet de limiter dans une certaine mesure l'influence du « Jitter » dans le procédé d'identification. D'autres solutions sont proposées dans ces documents pour réduire davantage l'influence du « Jitter », mais ces solutions impliquent une complexification des calculs allant à l'encontre du but recherché qui est la simplification du procédé d'identification.

Le procédé selon la présente invention propose une alternative du calcul de la valeur de ressemblance qui ne fait pas intervenir des écarts entre des instants d'arrivée pour des couples d'instants (Ti, Tj). En effet, lorsque la valeur des écarts entre les instants d'arrivée Ti et Tj est utilisée, les erreurs sur la mesure des instants peuvent s'ajouter et conduire à une décision erronée, même lorsque ces écarts ne sont calculés qu'entre des instants d'arrivée successifs.

Ainsi, le présent procédé prévoit que chaque valeur de ressemblance est établie à partir des écarts entre les couples d'instants (Ti ; TREFkj).

Ici, grâce à l'utilisation de la valeur de ressemblance, les erreurs sur la mesure des instants Ti ne peuvent pas s'ajouter étant donné que chaque instant Ti est pris en compte individuellement. Ceci améliore la robustesse de ce procédé vis-à-vis des erreurs de mesure des instants Ti.

Dans le procédé ci-dessus, seuls les instants d'arrivée Ti des impulsions reçues sont utilisés pour identifier la donnée Sk. L'amplitude ou la polarité des impulsions reçues ne sont pas prises en compte. Cela permet donc d'identifier sans difficulté une donnée émise par un émetteur éloigné du récepteur même si un autre émetteur beaucoup plus proche du récepteur émet des impulsions parasites d'amplitudes beaucoup plus importantes.

Enfin, la suite {T1 ; ... ; Ti ; ... ; TN} contient uniquement des instants d'arrivée. Cette suite peut donc facilement être enregistrée dans une mémoire de petite taille. Cette suite peut également facilement être transmise sur une liaison de transmission d'informations ayant une faible bande passante. Ainsi, le traitement de cette suite peut facilement être délocalisé ou déporté ou exécuté ultérieurement.

Les modes de réalisation de ce procédé peuvent comporter une ou plusieurs des caractéristiques suivantes :
- le calcul de la valeur de ressemblance pour un décalage temporel donné comprend :
   - le dénombrement des écarts entre les couples d'instants (Ti ; TREFkj) qui sont compris dans une plage de valeurs contenant ce décalage temporel, et
   - l'établissement de la valeur de ressemblance à partir du résultat de ce dénombrement ;
- le calcul de cette valeur de ressemblance comprend :
   - l'incrémentation d'un compteur associé à cette plage de valeurs d'un premier pas prédéterminé à chaque fois qu'un écart entre les couples d'instants (Ti ; TREFkj) tombe dans cette plage, et
   - l'incrémentation du même compteur d'un second pas prédéterminé à chaque fois qu'un écart entre les couples d'instants (Ti ; TREFkj) tombe dans une plage de valeurs adjacente, ce second pas prédéterminé étant inférieur au premier pas prédéterminé.
- le procédé comprend :
   - le calcul de la valeur de ressemblance pour tous les décalages temporels possibles, et
   - l'établissement d'un instant global d'arrivée TOAG pour la donnée Sk à partir du décalage temporel pour lequel la valeur de ressemblance calculée est la plus élevée ;
- le procédé comprend la détermination de la distance entre l'émetteur et le récepteur ou de la position de l'émetteur par rapport au récepteur du signal reçu à partir, en outre, de l'instant TOAG établi;
- le procédé comprend le décodage d'une donnée Dt codée dans le signal reçu à partir des instants TOAG successifs établis ;
- la donnée Sk est un identifiant de l'émetteur du signal reçu ;
- la construction de la suite {T1 ; ... ; Ti ; ... ; TN} comprend :
   - le calcul d'une valeur de similitude entre des échantillons du signal reçu et un bloc prédéterminé de plusieurs impulsions,
   - la génération d'un nouvel instant Ti indiquant le moment où cette valeur de similitude a dépassé un seuil prédéterminé ;
- le procédé comprend :
   - le calcul de plusieurs valeurs de similitude entre les derniers échantillons obtenus et des blocs prédéterminés respectifs de plusieurs impulsions, chaque bloc prédéterminé codant une donnée Db respective, et
   - la transmission dé la donnée Db à une unité de traitement de cette donnée à chaque fois que la valeur de similitude associée à cette donnée dépasse un seuil prédéterminé.
- le procédé comprend le filtrage du signal reçu en fonction de la donnée Sk identifiée pour éliminer des impulsions ou des blocs d'impulsions parasites ne codant pas la donnée Sk.

Ces modes de réalisation du procédé présentent en outre les avantages suivants :
- calculer la valeur de ressemblance à partir des écarts entre les couples d'instants (Ti ; TREFkj) empêche l'accumulation d'erreurs de mesure sur les instants Ti ;
- calculer la valeur de ressemblance à partir du dénombrement des écarts entre les couples d'instants (Ti ; TREFkj) simplifie le calcul d'une telle valeur de ressemblance,
- l'établissement de l'instant TOAG à partir des différentes valeurs de ressemblance calculées permet de calculer ce décalage temporel sans avoir à synchroniser les horloges des émetteur et récepteur,
- déterminer la distance ou la position de l'émetteur à partir de l'instant TOAG établi permet d'obtenir des résultats plus précis,
- coder des données supplémentaires Dt à l'aide des différents instants TOAG successifs établis permet de décoder ces données Dt sans qu'une synchronisation des horloges des récepteur et émetteur soit nécessaire,
- lorsque la donnée Sk est un identifiant de l'émetteur, le procédé permet d'identifier cet émetteur sans synchronisation des horloges des récepteur et émetteur,
- construire chacun des instants Ti à partir d'une valeur de similitude entre les derniers échantillons obtenus et un bloc prédéterminé d'impulsions permet d'améliorer le rapport signal/bruit,
- utiliser différents blocs prédéterminés d'impulsions permet de coder à l'aide de ces blocs des données supplémentaires Db.

L'invention a également pour objet un récepteur d'un signal contenant une donnée Sk codée par une modulation PPM (Pulse Position Modulation), dans lequel ce récepteur comprend :
- un constructeur d'une suite chronologique {T1 ; ... ; Ti ; ... ; TN} d'instants d'arrivée Ti d'impulsions ou de bloc d'impulsions successifs contenus dans le signal reçu,
- un calculateur apte à :
   - construire une valeur de ressemblance entre cette suite {T1 ; ... ; Ti ; ... ; TN} et une séquence chronologique prédéterminée {TREFk1 ; ... ; TREFkj ; ... ; TREFkM} d'instants d'arrivée codant la donnée Sk, pour plusieurs décalages temporels Ol entre la suite {T1 ; ... ; Ti ; ... ; TN} et la séquence {TREFk1 ; ... ; TREFkj ; ... ; TREFkM}, chaque valeur de ressemblance étant établie à partir des écarts entre les couples d'instants (Ti ; TREFkj) de manière à être représentative de la corrélation entre la suite {T1 ; ... ; Ti ; ... ; TN} et la suite {TREFk1 ; ... ; TREFkj ; ... ; TREFkM} pour un décalage temporel Ol donné,
   - identifier la donnée Sk dans la suite {T1 ; ... ; Ti ; ... ; TN} si la valeur de ressemblance calculée pour l'un des décalages temporels Ol franchit un seuil prédéterminé.

### Brève description des dessins

L'invention sera mieux comprise à la lecture de la description qui va suivre, donnée uniquement à titre d'exemple non limitatif et faite en se référant aux dessins sur lesquels :

la figure 1 est une illustration schématique d'un récepteur d'une donnée Sk codée par modulation PPM;

la figure 2 est une illustration schématique d'un calculateur de valeurs de similitude utilisé dans le récepteur de la figure 1;

la figure 3 est un organigramme d'un procédé d'identification de la donnée Sk mis en oeuvre par le récepteur de la figure 1;

les figures 4 à 9 sont des illustrations schématiques de différents chronogrammes de signaux traités par le récepteur de la figure 1;

la figure 10 est un histogramme illustrant le calcul d'une valeur de ressemblance, et

les figures 11 et 12 sont des illustrations schématiques de deux autres modes de réalisation possibles du récepteur.

### Mode(s) de réalisation de l'invention

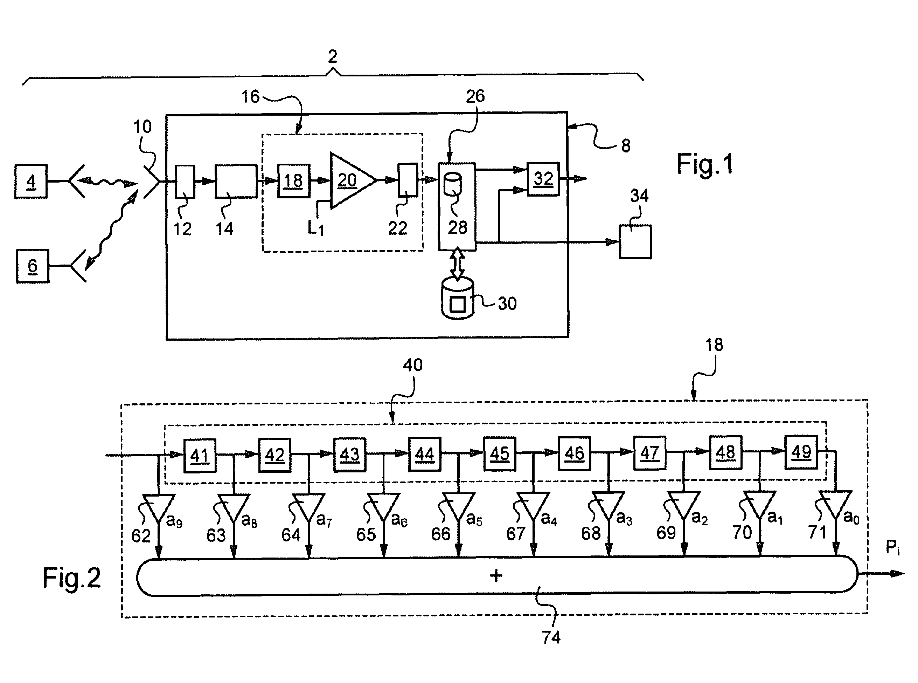

La figure 1 représente un système 2 de transmission de signaux entre des émetteurs et des récepteurs. A titre d'illustration, le système 2 utilise la technologie UWB pour la transmission de ces signaux.

Pour simplifier la figure 2, seuls deux émetteurs 4 et 6 ont été représentés et un seul récepteur 8.

Les émetteurs 4 et 6 sont chacun aptes à émettre une séquence d'impulsions codant, respectivement, une donnée S1 et S2 à l'aide d'une modulation PPM. Ici, on considère que ces données S1 et S2 sont, respectivement, des identifiants des émetteurs 4 et 6. Plus précisément, les données S1 et S2 sont codées par des instants d'arrivée d'un bloc prédéterminé d'impulsions. Les données S1 et S2 sont notées Sk, où k est un nombre entier pouvant prendre la valeur une ou deux.

Ici, ce bloc d'impulsion est le même que le signal soit émis par l'émetteur 4 ou 6. Chaque impulsion de chaque bloc dure moins de 5ns et, de préférence, moins de 1ns. Une séquence est formée de M blocs prédéterminés d'impulsions successifs. La valeur de M n'est pas nécessairement la même pour la séquence codant S1 que celle codant S2.

De plus, chacun de ces émetteurs est apte à coder une donnée Dt en utilisant une modulation DPPM entre les instants globaux d'arrivée (TOAG) des séquences codant la donnée S1 ou S2.

Le récepteur 8 est équipé d'une antenne ultra-large bande 10. Cette antenne est raccordée à un bloc 12 permettant d'exécuter sur le signal reçu les différents traitements analogiques nécessaires pour permettre une conversion du signal analogique reçu en un signal numérique. La sortie de ce bloc 12 est raccordée à l'entrée d'un convertisseur 14 analogique-numérique. La période Te d'échantillonnage de ce convertisseur 14 est choisie pour être au moins deux fois inférieure à la durée d'une impulsion et de préférence au moins dix fois inférieure à la durée d'une impulsion contenue dans le signal reçu.

Une sortie du convertisseur 14 délivre le signal reçu échantillonné à une entrée d'un constructeur 16 d'une suite {T1 ; ... ; Ti ; ... ; TN} d'instants d'arrivée Ti des blocs d'impulsions contenus dans le signal reçu.

Par exemple, à cet effet, le constructeur 16 comprend un calculateur 18 d'une valeur de similitude entre les derniers échantillons du signal reçu et le bloc prédéterminé d'impulsions. Par exemple, les derniers échantillons reçus correspondent à ceux prélevés sur une période du signal reçu qui dure plus longtemps que le bloc d'impulsions et moins longtemps que deux blocs d'impulsions. Ce calculateur 18 est décrit plus en détail en regard de la figure 2.

Le calculateur 18 délivre sur une sortie une valeur de similitude entre les derniers échantillons reçus et le bloc prédéterminé d'impulsions. Cette valeur de similitude est d'autant plus grande que la corrélation entre le signal reçu et ce bloc prédéterminé d'impulsions est importante.

Cette sortie du calculateur 18 est raccordée à une entrée d'un comparateur 20. Le comparateur 20 compare en permanence la valeur de similitude à un seuil prédéterminé L1. Au moment où cette valeur de similitude dépasse le seuil L1, le comparateur 20 génère un front montant sur un signal transmis à l'entrée d'un convertisseur 22 temps-numérique. Ce convertisseur 22 est plus connu sous l'expression anglaise de « Time to Digital Converter ». Le convertisseur 22 génère à chaque front montant reçu sur son entrée une valeur numérique correspondant à l'instant Ti auquel s'est produit le front en montant. Ainsi, le constructeur 16 délivre une suite chronologique d'instants d'arrivée Ti. La suite des N instants Ti construits pendant la durée d'une séquence est notée {T1 ; ... ; Ti ; ... ; TN}. N n'a pas nécessairement la même valeur que M (nombre de blocs d'impulsions dans une séquence). Par exemple, la suite {T1 ; ... ; Ti ; ... ; TN} peut comporter des instants supplémentaires parasites.

La sortie du convertisseur 22 est raccordée à une entrée d'un calculateur 26 de valeurs de ressemblance entre la suite {T1 ; ... ; Ti ; ... ; TN} et une séquence prédéterminée SREFk d'instants d'arrivée. La séquence SREFk contient uniquement les instants d'arrivée théoriques des impulsions codant la donnée Sk. Ces instants théoriques sont notés TREFkj et la séquence SREFk peut donc également s'écrire sous la forme {TREFk1 ; ... ; TREFkj ; ... ; TREFkM}. Chaque séquence SREFk caractérise donc une donnée Sk susceptible d'être reçue par le récepteur. Ces séquences sont préenregistrées dans une mémoire 30 raccordée au calculateur 26. Ici, la mémoire 30 contient au moins les séquences SREF1 et SREF2 codant, respectivement, les données S1 et S2.

La valeur de ressemblance est représentative de la corrélation entre la suite {T1 ; ... ; Ti ; ... ; TN} et la séquence SREFk. Ici, cette valeur de ressemblance est d'autant plus grande que la corrélation entre la suite et la séquence est importante.

Pour réaliser cette tâche, le calculateur 26 est aussi équipé d'une mémoire tampon 28 apte à stocker la suite {T1 ; ..: ; Ti ; ... ; TN}.

Le calculateur 26 est raccordé en sortie à un décodeur 32 et à une unité 34 de calcul de la distance entre le récepteur 8 et les émetteurs 4 et 6 ou de la position de ces émetteurs 4 et 6. Ici, l'unité 34 est une unité déportée située à l'extérieur du récepteur 8.

Le décodeur 32 est apte à décoder la donnée Dt.

La figure 2 représente un mode particulier de réalisation du calculateur de similitude 18. Ici, ce calculateur de similitude est implémenté sous la forme d'un filtre adapté au bloc prédéterminé d'impulsions. Plus précisément, il s'agit ici d'un filtre à réponse impulsionnelle finie plus connu sous le terme anglais de filtre FIR (Finite Impulse Response).

Par exemple, le calculateur 18 comprend une ligne à retard 40 composée d'une succession de blocs 41 à 49 aptes chacun à retarder d'une période d'échantillonnage Te le signal échantillonné reçu en entrée de cette ligne 40. Les blocs 41 à 49 sont par exemple des bascules D.

Ici, le nombre de blocs de la ligne 40 a été limité à neuf uniquement pour simplifier l'illustration.

L'entrée et la sortie de chacun de ces blocs 41 à 49 sont raccordées par l'intermédiaire des multiplieurs 62 à 71 respectifs à un additionneur 74. Chacun des multiplieurs 62 à 71 est apte à multiplier le signal reçu en entrée par un coefficient, respectivement, a0 à a9. La valeur des coefficients a0 à a9 est choisie en fonction du bloc prédéterminé d'impulsions pour que les échantillons du signal reçu s'ajoutent les uns aux autres de façon constructive dans l'additionneur 74 uniquement lorsque le signal reçu contient un bloc d'impulsions identique au bloc prédéterminé d'impulsions.

Ainsi, la sortie de l'additionneur 74 est une valeur de similitude. Cette valeur est importante uniquement si les derniers échantillons du signal reçu correspondent au bloc prédéterminé d'impulsions.

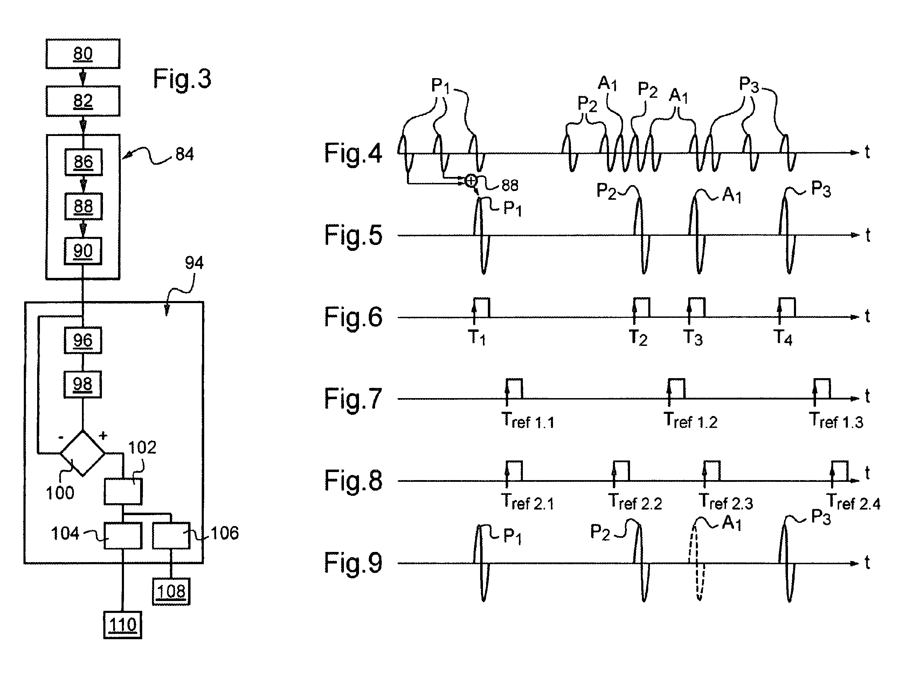

Le fonctionnement du récepteur du système 2 va maintenant être décrit plus en détail en regard du procédé de la figure 3 et à l'aide des chronogrammes des figures 4 à 8.

Initialement, lors d'une étape 80, les émetteurs 4 et 6 envoient chacun un signal au récepteur 8 en utilisant la technologie UWB.

Ici, dans la suite de cette description, on ne traite que du signal envoyé par l'émetteur 4. Le traitement du signal envoyé par l'émetteur 6 peut être déduit des explications données en regard du signal émis par l'émetteur 4.

Ici, l'émetteur 4 envoie des séquences d'impulsions. Chacune de ces séquences d'impulsions code la donnée S1 par modulation PPM. De plus, l'émetteur 4 code la donnée Dt en modulant les temps globaux d'arrivée (TOAG) des séquences.

La figure 4 représente une illustration d'une séquence d'impulsions émises par l'émetteur 4 dans le cas particulier où cette séquence comporte trois blocs impulsions P1, P2 et P3 identiques. Par exemple, chaque bloc est formé par la répétition d'une même impulsion. Ici, l'impulsion est répétée trois fois dans chaque bloc.

De plus, sur la figure 4, on a représenté un bloc parasite d'impulsions A1. Ce bloc parasite est identique aux blocs P1, P2 et P3 mais décalé temporellement par rapport à ces blocs. Par exemple, le bloc A1 est généré par une réflexion du signal émis sur un obstacle ou par un autre utilisateur utilisant un même bloc.

Lors d'une étape 82, le signal émis par l'émetteur 4 est reçu et capté par l'antenne 10 du récepteur 8. Ensuite, il traverse le bloc 12 avant d'être échantillonné par le convertisseur 14.

Lors d'une étape 84, le constructeur 16 construit à partir du signal reçu échantillonné la suite {T1 ; ... ; Ti ; ... ; TN}. Plus précisément, lors d'une opération 86, le calculateur 18 calcule la valeur de similitude entre les derniers échantillons reçus et le bloc prédéterminé d'impulsions. Ici, ce bloc prédéterminé d'impulsions correspond à l'un des blocs P1, P2 et P3 représentés sur la figure 4. Plus précisément les échantillons sont reçus dans la ligne à retard 40. A chaque période d'échantillonnage, les échantillons contenus dans la ligne à retard sont décalés d'un bloc vers la droite et l'additionneur 74 réalise l'addition de ces échantillons après qu'ils aient été multipliés par les coefficients a0 à a9. Ainsi, à chaque période d'échantillonnage Te, le résultat de cette addition, c'est-à-dire la valeur de similitude, est délivré à l'entrée du comparateur 20.

Comme représenté par un symbole d'addition 88 entre les figures 4 et 5, le calculateur 18 réalise en quelques sortes l'addition des impulsions du bloc d'impulsion P1 pour construire une seule impulsion d'amplitude augmentée également désignée par le repère P1 sur la figure 5.

Ensuite, lors d'une opération 88, à chaque fois que le comparateur 20 détecte que la valeur de similitude dépasse le seuil L1, il génère un front montant sur un signal de sortie. Ce signal de sortie est illustré sur la figure 6.

Ensuite, lors d'une opération 90, le convertisseur 22 convertit chacun des fronts montants en une valeur numérique Ti transmise au calculateur 26.

Ici, chaque instant Ti représente l'instant d'arrivée d'un bloc d'impulsions.

Ainsi, le constructeur 16 construit la suite {T1 ; ... ; Ti ; ... ; TN}. Sur l'exemple illustré par la figure 6, cette suite comprend uniquement quatre instants T1 à T4 parmi lesquels l'instant T3 est un instant parasite.

Ensuite, le calculateur 26 procède à une première étape 94 de décodage de cette suite {T1 ; ... ; T4}.

Au début de l'étape 94, lors d'une opération 96, le calculateur 26 calcule les valeurs de ressemblance entre la suite {T1 ; ... ; T4} et la séquence SREF1 pour différence décalage temporel Ol. Par exemple, la séquence SREF1 comporte uniquement trois instants d'arrivée et s'écrit {TREF11 ; ... ; TREF13}. La séquence SREF1 est illustrée sur la figure 7. Cette séquence contient les instants théoriques d'arrivée des blocs d'impulsions P1 à P3 codant la donnée S1.

Pour calculer ces valeur de ressemblance, le calculateur 26 calcule tous les écarts entre les couples (Ti ; TREF1j). Par exemple, ici, le calculateur 26 calcule les écarts suivants :
T1-TREF11 = -2
T1-TREF12 = -11
T1-TREF13 = -19
T2-TREF11 =7
T2-TREF12 =-2
T2-TREF13 = -10
T3-TREF11 =10
T3-TREF12 = 1
T3-TREF13 =-7
T4-TREF11 = 15
T4-TREF12 = 6
T4-TREF13 = -2

Ici, les valeurs numériques données ci-dessus représentent les durées des intervalles de temps séparant les couples d'instants (Ti ; TREF1j) exprimées en nombre de période d'échantillonnage Te.

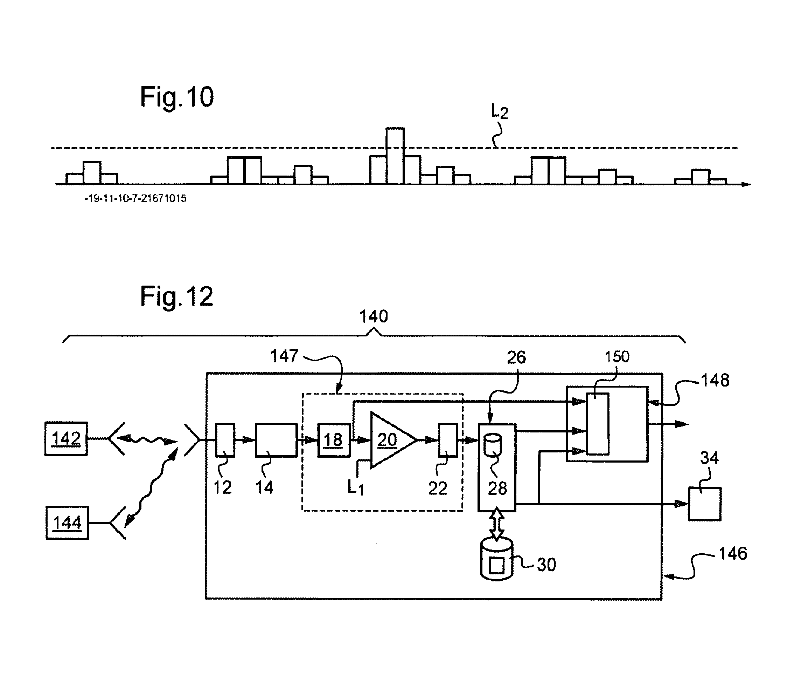

Ensuite, un histogramme des différentes valeurs d'écarts obtenues est construit. Cet histogramme est représenté sur la figure 10 et correspond aux valeurs numériques données ci-dessus.

A chaque fois que la valeur de l'écart prend une valeur donnée, un compteur correspondant à cette valeur donnée est incrémenté d'un pas prédéterminé. Ici, le pas prédéterminé est choisi égal à un. De plus, pour rendre le procédé plus robuste vis-à-vis du « Jitter », on incrémente également d'un pas inférieur prédéterminé, des compteurs associés aux valeurs justes inférieure et supérieure à la valeur donnée. Par exemple, le pas inférieur est égal à 0,5.

Par exemple, le compteur associé à la valeur « -2 » est incrémenté de trois car l'écart « -2 » apparaît trois fois. On incrémente également de 1,5 les compteurs associés aux valeurs « -3 » et « -1 ».

De même, le compteur associé à la valeur « - 19 » est incrémenté uniquement de un car la valeur « -19 » n'apparaît qu'une seule fois et les compteurs associés aux valeurs « -20 » et « -18 » sont seulement incrémentés de 0,5.

Dans l'histogramme de la figure 10, chaque compteur correspond à un décalage temporel Ol possible entre la suite {T1 ; ... ; T4} et la séquence SREF1. La valeur de chaque compteur correspond à la valeur de ressemblance entre la suite {T1 ; ... ; T4} et la séquence SREF1 pour le décalage temporel Ol associé à ce compteur.

Ensuite, lors d'une opération 100, chaque valeur de ressemblance est comparée à un seuil prédéterminé L2 (voir figure 10). Si le seuil L2 n'est franchi par aucune valeur de ressemblance, alors le procédé retourne à l'opération 96 pour calculer cette fois-ci les valeurs de ressemblance entre la suite {T1 ; ... ; T4} et la séquence SREF2 codant la donnée S2. Un exemple de séquence SREF2 est représenté sur la figure 8. Dans cette autre suite de référence, les instants TREF21 à TREF24 correspondent aux instants d'arrivée des blocs d'impulsions codant la donnée S2.

Dans le cas où le seuil L2 est dépassé par l'une des valeurs de ressemblance calculées lors de l'opération 98, alors le calculateur 26, lors d'une opération 102, identifie la présence de la donnée Sk dans la suite {T1 ; ... ; T4}.

De plus, lors de l'opération 102, le calculateur 26 sélectionne le décalage temporel Ol associé à la valeur de ressemblance la plus grande. Par exemple, dans l'exemple de la figure 10, lors de l'étape 102, le calculateur 26 sélectionne le décalage temporel « -2 ».

Ensuite, l'instant global d'arrivée TOAG de la séquence S1 est déterminé à partir du décalage temporel Ol. Par exemple, l'instant TOAG est pris égal au décalage temporel Ol associé à la valeur de ressemblance la plus grande.

Lors d'une opération 104, le calculateur 26 transmet l'instant TOAG au décodeur 32 et à l'unité 34.

En parallèle de l'opération 104, lors d'une opération 106, le calculateur 26 transmet également la donnée S1 identifiée au décodeur 32.

Lors d'une étape 108, à partir des différents instants TOAG transmis par le calculateur 26 et des données Sk associées à chacun de ces instants, le décodeur 8 décode la donnée Dt contenue dans le signal transmis par l'émetteur 4.

En parallèle, lors d'une étape 110, l'unité 34 détermine la position de l'émetteur 4 à partir des instants TOAG transmis par le récepteur 8 ainsi que par d'autres récepteurs situés à proximité de l'émetteur 4. L'unité 34 est également apte à déterminer la distance qui sépare le récepteur 8 de l'émetteur 4 à partir des différents instants TOAG délivrés par le récepteur 8. Pour cela, des algorithmes conventionnels peuvent être utilisés. Eventuellement, pour estimer la distance entre émetteur et récepteur une synchronisation entre émetteur et récepteur est requise en plus de la connaissance de l'instant TOAG. De même, pour estimer la position d'un émetteur, une synchronisation entre les récepteurs peut être nécessaire.

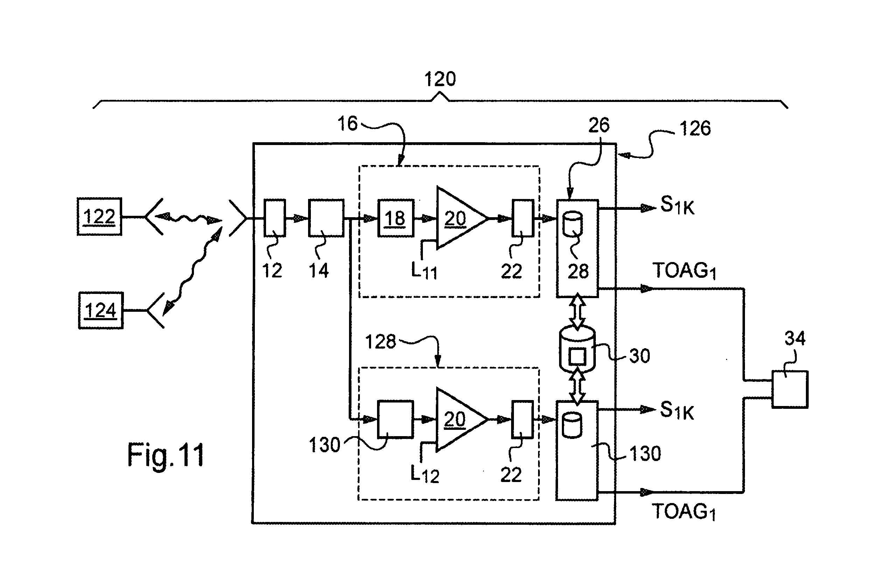

La figure 11 représente un système 120 de transmission d'informations entre des émetteurs et des récepteurs. Sur la figure 11, seuls des émetteurs 122 et 124 et un récepteur 126 sont représentés. Ce système 120 diffère du système 2 en ce que l'identifiant des émetteurs 122 et 124 est codé dans chaque bloc d'impulsions. Ainsi, l'agencement des impulsions dans le bloc d'impulsions B1 émis par l'émetteur 122 identifie cet émetteur. Il en est de même pour le bloc d'impulsions B2 émis par l'émetteur 124. Puisque les émetteurs 122 et 124 peuvent être identifiés à partir de leurs blocs respectifs d'impulsions, il n'est plus nécessaire que les données Sk identifient aussi ces émetteurs. Dans ce mode de réalisation, les données S1 et S2 correspondent donc à une autre information que l'identifiant de l'émetteur du signal.

Le récepteur 126 est identique au récepteur 8 à l'exception du fait qu'il comporte un constructeur supplémentaire 128 raccordé à l'entrée d'un calculateur supplémentaire 130 de valeurs de ressemblance.

Le constructeur 128 est identique au constructeur 16 à l'exception du fait que le calculateur 18 est remplacé par un calculateur 130. Le calculateur 130 est par exemple un filtre adapté. Toutefois, dans le cas du calculateur 130, ce filtre est adapté sur le bloc B2. A l'inverse, le filtre du calculateur 18 est adapté sur le bloc B1.

Ainsi, le constructeur 16 construit uniquement la suite des instants d'arrivée des blocs d'impulsions B1 tandis que le constructeur 128 construit uniquement la suite des instants d'arrivée des blocs d'impulsions B2.

Le calculateur 130 est identique au calculateur 26 à l'exception du fait qu'il traite la suite des instants d'arrivée des blocs d'impulsions B2.

Dans ce mode de réalisation, le décodeur 32 peut être omis. En effet, le décodage des données Sk est directement réalisé par les calculateurs 26 et 130.

La figure 12 représente un système 140 de transmission d'informations entre des émetteurs et des récepteurs. Pour simplifier la figure, seuls deux émetteurs 142 et 144 et un récepteur 146 ont été représentés.

Dans ce mode de réalisation, les identifiants S1 et S2 des émetteurs 142 et 144 sont codés dans chaque séquence d'impulsions par modulation PPM. De plus, une donnée Dk est également codée dans chaque séquence en utilisant à cet effet l'amplitude ou la polarité des impulsions de la séquence. Aucune donnée n'est codée dans les blocs d'impulsions.

Le récepteur 146 est identique au récepteur 8 à l'exception du fait que le constructeur 16 est remplacé par un constructeur 147. Le constructeur 147 est identique au constructeur 16 sauf que la sortie du calculateur 18 est aussi directement raccordée à un décodeur 148.

On rappelle qu'un exemple de signal généré à la sortie du calculateur 18 est représenté sur la figure 5. A cet endroit, le signal généré par le calculateur 18 comprend encore des informations sur l'amplitude ou la polarité de chacune des impulsions émises par l'émetteur.

Le décodeur 148 reçoit le signal généré par le calculateur 18, la donnée Sk identifiée par le calculateur 26 est l'instant TOAG sélectionné par le calculateur 26.

Le décodeur 148 comprend ici un filtre 150 apte à éliminer les impulsions parasites présentes dans le signal généré par le calculateur 18 à l'aide de la donnée Sk et de l'instant TOAG. Par exemple, à cet effet, le filtre 150 utilise la donnée Sk pour identifier un masque comprenant des fenêtres de temps situées uniquement aux endroits où les impulsions P1 à P3 doivent être reçues. Ce masque est synchronisé par rapport au signal généré par le calculateur 18 en utilisant à cet effet l'instant TOAG. Toute impulsion présente dans le signal généré par le calculateur 18 qui est située en dehors d'une de ces fenêtres temporelles est éliminée. Ainsi, comme représenté sur la figure 9, ce filtre permet d'éliminer l'impulsion parasite A1. Ensuite, le décodeur 148 décode la donnée Dk contenue dans le signal filtré par le filtre 150. Ce décodage de la donnée Dk codée en amplitude ou en polarité est conventionnel.

De nombreux autres modes de réalisation sont possibles. Par exemple, d'autres modes de réalisation du calculateur de similitude sont possibles. Par exemple, le procédé décrit dans la demande de brevet EP 1 553 426 peut être utilisé pour identifier le temps d'arrivé d'un bloc d'impulsions. Le calculateur de valeurs de similitude peut également mettre en oeuvre une corrélation conventionnelle entre le signal reçu et le bloc prédéterminé d'impulsions.

Le calcul de similitude peut également être réalisé sur le signal analogique reçu. Ainsi, le convertisseur analogique-numérique peut être omis.

Si l'amplitude de chaque impulsion est suffisante pour dépasser l'amplitude du bruit, alors les instants d'arrivée Ti correspondent aux instants d'arrivée de chaque impulsion. Dans ce cas, le calculateur de similitude peut être omis.

De nombreux autres modes de réalisation du calculateur de valeurs de ressemblance sont également possibles. Par exemple, le compteur associé à un décalage temporels est incrémenté non pas lorsque la valeur de l'écart entre le couple d'instants (Ti ; TREFkj) est égale à ce décalage temporel mais dès que l'écart est compris dans une plage prédéterminée de valeurs contenant ce décalage temporel. Dans ce mode de réalisation, les compteurs associés aux plages adjacentes peuvent aussi être incrémentés d'un pas inférieur déterminé. De préférence, dans ce mode de réalisation, la plage de valeurs est strictement plus grande que la durée d'une impulsion. La taille de la plage de valeurs sera cependant inférieure à la moitié du plus petit intervalle de temps séparant deux blocs d'impulsions.

La valeur de ressemblance peut être calculée à chaque fois qu'un nouvel instant Ti est reçu. Cette valeur de ressemblance peut également être calculée à intervalle régulier par exemple toutes les millisecondes. Typiquement, l'intervalle régulier est choisi pour être supérieur à la durée de réception de la donnée Sk et de préférence supérieur à deux fois la durée de réception de la donnée Sk.

L'instant TOAG peut être déterminé à partir de la moyenne des instants Ti ou en additionnant les différents instants Ti ou à partir de la médiane des instants Ti.

Les données peuvent être codées par de très nombreuses façons différentes dans le signal reçu. Par exemple, une donnée Dk et l'identifiant de l'émetteur peuvent simultanément être codés à l'intérieur d'une même séquence par modulation PPM. Dans ce cas, pour chaque émetteur, la mémoire 30 contient deux séquences de références SREF11 et SREF12. La séquence SREF11 correspond à une séquence émise par cet émetteur et codant une première valeur de la donnée Dk. La séquence SREF12 correspond également à une suite d'instants caractéristiques du même émetteur mais codant une deuxième valeur de la donnée Dk. Dans ce cas, lorsque le calculateur 26 établit que la valeur de ressemblance entre la suite {T1 : ... ; Ti ; ... ; TN} et la séquence SREF11 dépasse le seuil L2 alors cela correspond au décodage simultané des deux informations suivantes à savoir :
- l'identité de l'émetteur, et
- la valeur codée de la donnée Dk.

Dans ce mode de réalisation, le décodeur peut être omis.

Des données autres que l'identifiant de l'émetteur peuvent également être codées à l'intérieur de chaque bloc d'impulsions. Le codage de ces données dans chaque bloc peut être réalisé à l'aide d'une modulation PPM ou à l'aide d'une modulation d'amplitude ou de polarité. Dans ce cas, le décodage de la donnée Db codée dans chaque bloc est réalisé par le calculateur de la valeur de similitude.

Le décodeur 32 peut être omis si seule les données Sk doivent être décodées.

En variante, l'unité de positionnement peut être incorporée à l'intérieur du récepteur.

A l'inverse, le calculateur de la valeur de ressemblance peut être déporté et placé à l'extérieur du récepteur. Ceci est rendu possible par le fait que la suite {T1 ; ... ; Ti ; ... ; TN} peut être transmise à distance en utilisant une faible bande passante. En effet, dans cette suite, les informations concernant l'amplitude ou la polarité des impulsions ont été omises.

Ce qui a été décrit ci-dessus, s'applique à d'autres technologies que la technologie UWB. Par exemple, le procédé d'identification de symbole Sk peut être appliqué dans des systèmes de transmission d'informations utilisant la technologie CDMA ou dans des systèmes de transmission optique.

## Revendications

1. Procédé d'identification d'une donnée Sk codée par une modulation PPM (Pulse Position Modulation) dans un signal reçu, **caractérisé en ce que** ce procédé comprend :
a) la construction (84) d'une suite chronologique {T1 ; ... ; Ti ; ... ; TN} d'instants d'arrivée Ti d'impulsions ou de bloc d'impulsions successifs contenus dans le signal reçu,
b) le calcul (96) d'une valeur de ressemblance entre cette suite {T1 ; ... ; Ti ; ... ;TN} et une séquence chronologique prédéterminée {TREFk1 ; ... ; TREFkj ; ... ; TREFkM} d'instants d'arrivée codant la donnée Sk pour plusieurs décalages temporels Ol entre la suite {T1 ; ... ; Ti ; ... ;TN} et la séquence {TREFk1 ; ... ; TREFkj ; ... ; TREFkM}, chaque valeur de ressemblance étant établie à partir des écarts entre les couples d'instants (Ti ; TREFkj) de manière à être représentative de la corrélation entre la suite {T1 ; ... ;Ti ; ... ;TN} et la séquence {TREFk1 ; ... ; TREFkj ; ... ; TREFkM} pour un décalage temporel Ol donné,
c) l'identification de la donnée Sk dans la suite {T1 ; ... ; Ti ; ... ; TN} si la valeur de ressemblance calculée pour l'un des décalages temporels Ol franchit un seuil prédéterminé.

2. Procédé selon la revendication 1, dans lequel le calcul de la valeur de ressemblance pour un décalage temporel donné comprend :
• le dénombrement des écarts entre les couples d'instants (Ti ; TREFkj) qui sont compris dans une plage de valeurs contenant ce décalage temporel, et
• l'établissement de la valeur de ressemblance à partir du résultat de ce dénombrement.

3. Procédé selon la revendication 2, dans lequel le calcul de cette valeur de ressemblance comprend :
• l'incrémentation d'un compteur associé à cette plage de valeurs d'un premier pas prédéterminé à chaque fois qu'un écart entre les couples d'instants (Ti ; TREFkj) tombe dans cette plage, et
• l'incrémentation du même compteur d'un second pas prédéterminé à chaque fois qu'un écart entre les couples d'instants (Ti ; TREFkj) tombe dans une plage de valeurs adjacente, ce second pas prédéterminé étant inférieur au premier pas prédéterminé.

4. Procédé selon l'une quelconque des revendications précédentes, dans lequel le procédé comprend :
• le calcul (96) de la valeur de ressemblance pour tous les décalages temporels possibles, et
• l'établissement (102) d'un instant global d'arrivée TOAG pour la donnée Sk à partir du décalage temporel pour lequel la valeur de ressemblance calculée est la plus élevée.

5. Procédé selon la revendication 4, dans lequel le procédé comprend la détermination (110) de la distance entre l'émetteur et le récepteur ou de la position de l'émetteur par rapport au récepteur du signal reçu à partir, en outre, de l'instant TOAG établi.

6. Procédé selon la revendication 4, dans lequel le procédé comprend le décodage (108) d'une donnée Dt codée dans le signal reçu à partir des instants TOAG successifs établis.

7. Procédé selon l'une quelconque des revendications précédentes, dans lequel la donnée Sk est un identifiant de l'émetteur du signal reçu.

8. Procédé selon l'une quelconque des revendications précédentes, dans lequel la construction de la suite {T1 ; ... ; Ti ; ... ; TN} comprend :
• le calcul (86) d'une valeur de similitude entre des échantillons du signal reçu et un bloc prédéterminé de plusieurs impulsions,
• la génération (88) d'un nouvel instant Ti indiquant le moment où cette valeur de similitude a dépassé un seuil prédéterminé.

9. Procédé selon la revendication 8, dans lequel le procédé comprend
• le calcul de plusieurs valeurs de similitude entre les derniers échantillons du signal reçu et des blocs prédéterminés respectifs de plusieurs impulsions, chaque bloc prédéterminé codant une donnée Db respective, et
• la transmission de la donnée Db à une unité de traitement de cette donnée à chaque fois que la valeur de similitude associée à cette donnée dépasse un seuil prédéterminé.

10. Procédé selon l'une quelconque des revendications précédentes, dans lequel le procédé comprend le filtrage du signal reçu en fonction de la donnée Sk identifiée pour éliminer des impulsions ou des blocs d'impulsions parasites ne codant pas la donnée Sk.

11. Récepteur d'un signal contenant une donnée Sk codée par une modulation PPM (Pulse Position Modulation), **caractérisé en ce que** ce récepteur comprend :
- un constructeur (16 ; 128 ; 147) d'une suite chronologique {T1 ; ... ; Ti ; ... ; TN} d'instants d'arrivée Ti d'impulsions ou de bloc d'impulsions successifs contenus dans le signal reçu,
- un calculateur (26, 130) apte à :
• construire une valeur de ressemblance entre cette suite {T1 ; ... ; Ti ; ... ; TN} et une séquence chronologique prédéterminée {TREFk1 ; ... ; TREFkj ; ... ; TREFkM} d'instants d'arrivée codant la donnée Sk, pour plusieurs décalages temporels Ol entre la suite {T1 ; ... ; Ti ; ... ; TN} et la séquence {TREFk1 ; ... ; TREFkj ; ... ; TREFkM}, chaque valeur de ressemblance étant établie à partir des écarts entre les couples d'instants (Ti ; TREFkj) de manière à être représentative de la corrélation entre la suite {T1 ; ... ;Ti ; ... ; TN} et la séquence {TREFk1 ; ... ; TREFkj ; ... ; TREFkM} pour un décalage temporel Ol donné,
• identifier la donnée Sk dans la suite {T1 ; ... ; Ti ; ... ; TN} si la valeur de ressemblance calculée pour l'un des décalages temporels Ol franchit un seuil prédéterminé.

## Claims

1. Method for identifying a data Sk encoded by PPM modulation (Pulse Position Modulation) in a received signal, **characterised in that** the method comprises:
a) the construction (84) of a chronological series {T1; ...; Ti; ...; TN} of times of arrival Ti of successive pulses or blocks of pulses contained in the received signal,
b) the calculation (96) of a value of similarity between this series {T1; ...; Ti; ...; TN} and a predetermined chronological sequence {TREFk1; ...; TREFkj; ...; TREFkM} of times of arrival coding the data Sk for several time offsets Ol between the series {T1; ...; Ti; ...; TN} and the sequence {TREFk1; ...; TREFkj; ...; TREFkM}, each value of similarity being based on the differences between the time pairs (Ti; TREFkj) so as to be representative of the correlation between the series {T1; ...; Ti; ...; TN} and the sequence {TREFk1; ...; TREFkj; ...; TREFkM} for a given time offset Ol,
c) the identification of the data Sk in the series {T1; ...; Ti; ...; TN} if the calculated value of similarity for one of the time offsets Ol exceeds a predetermined threshold.

2. Method according to claim 1, in which the calculation of the value of similarity for a given time offset includes:
- counting the differences between the time pairs (Ti; TREFkj) which are included in a range of values containing this time offset, and
- the computation of the value of similarity from the result of this count.

3. Method according to claim 2, in which calculating the value of similarity comprises:
- the incrementation of a counter associated with this range of values with a first predetermined step each time a difference between the time pairs (Ti; TREFkj) falls within this range, and
- the incrementation of the same counter with a second predetermined step each time a difference between the time pairs (Ti; TREFkj) falls within an adjacent range of values, the second predetermined step being less than the first predetermined step.

4. Method according to any one of the preceding claims, wherein the method comprises:
- the calculation (96) of the value of similarity for all possible time offsets, and
- the computation (102) of a global time of arrival TOAG for the data Sk based on the time offset for which the calculated value of similarity is the highest.

5. Method according to claim 4 in which the method includes the determination (110) of the distance between the transmitter and the receiver or of the position of the transmitter in relation to the receiver which received the signal and also from the computed time TOAG.

6. Method according to claim 4, in which the method includes decoding (108) of a data Dt encoded in the received signal from the successive computed times TOAG.

7. Method according to any one of the preceding claims, in which the data Sk is an identifier of the transmitter of the received signal.

8. Method according to any one of the preceding claims, in which the construction of the series {T1; ...; Ti; ...; TN} comprises:
- the calculation (86) of a similitude value between samples of the received signal and a predetermined block of several pulses,
- the generation (88) of a new time Ti indicating the time at which this similitude value has exceeded a predetermined threshold.

9. Method according to claim 8, in which the method comprises:
- the calculation of several similitude values between the last samples of the received signal and respective predetermined blocks of several pulses, each predetermined block coding a respective data Db, and
- the transmission of the data Db to a processing unit of this data each time that the similitude value associated to this data exceeds a predetermined threshold.

10. Method according to any one of the preceding claims in which the method includes filtering the received signal as a function of the identified data Sk to eliminate parasitic pulses or blocks of pulses not coding the data Sk.

11. Receiver of a signal containing a data Sk encoded by a PPM modulation (Pulse Position Modulation), **characterised in that** this receiver comprises:
- a constructor (16; 128; 147) of a chronological series {T1; ...; Ti; ...; TN} of times of arrival Ti of successive pulses or blocks of pulses contained in the received signal,
- a calculator (26, 130) capable of:
- constructing a value of similarity between this series {T1; ...; Ti; ...; TN} and a predetermined chronological sequence {TREFk1; ...; TREFkj; ...; TREFkM} of times of arrival coding the data Sk for several time offsets Ol between the series {T1; ...; Ti; ...; TN} and the sequence {TREFk1; ...; TREFkj; ...; TREFkM}, each value of similarity being based on the differences between the time pairs (Ti; TREFkj) so as to be representative of the correlation between the series {T1; ...; Ti; ...; TN} and the sequence {TREFk1; ...; TREFkj; ...; TREFkM} for a given time offset Ol,
- identifying the data Sk in the series {T1; ...; Ti; ...; TN} if the calculated value of similarity for one of the time offsets Ol exceeds a predetermined threshold.

## Patentansprüche

1. Verfahren zur Identifizierung eines durch eine PPM-Modulation (Pulse Position Modulation) codierten Datenwerts Sk in einem empfangenen Signal, **dadurch gekennzeichnet, dass** dieses Verfahren enthält:
a) die Konstruktion (84) einer chronologischen Folge {T1; ...; Ti; ...; TN} von aufeinanderfolgenden Ankunftszeitpunkten Ti von Impulsen oder Blöcken von Impulsen, die im empfangenen Signal enthalten sind,
b) die Berechnung (96) eines Ähnlichkeitswerts zwischen dieser Folge {T1; ...; Ti; ...; TN} und einer vorbestimmten chronologischen Sequenz {TREFk1; ...; TREFkj; ...; TREFkM} von Ankunftszeitpunkten, die den Datenwert Sk für mehrere Zeitverzögerungen Ol zwischen der Folge {T1; ...; Ti; ...; TN} und der Sequenz (TREFk1; ...; TREFkj; ...; TREFkM} codieren, wobei jeder Ähnlichkeitswert ausgehend von den Abweichungen zwischen den Paaren von Zeitpunkten (Ti; TREFkj) so erstellt wird, dass er für die Korrelation zwischen der Folge {T1; ...; Ti; ...; TN} und der Sequenz {TREFk1; ...; TREFkj; ...; TREFkM} für eine gegebene Zeitverzögerung Ol repräsentativ ist,
c) die Identifizierung des Datenwerts Sk in der Folge {T1; ...; Ti; ...; TN}, wenn der für eine der Zeitverzögerungen Ol berechnete Ähnlichkeitswert einen vorbestimmten Schwellwert überschreitet.

2. Verfahren nach Anspruch 1, bei dem die Berechnung des Ähnlichkeitswerts für eine gegebene Zeitverzögerung enthält:
• die Zählung der Abweichungen zwischen den Paaren von Zeitpunkten (Ti; TREFkj), die in einem diese Zeitverzögerung enthaltenden Wertebereich liegen, und
• die Erstellung des Ähnlichkeitswerts ausgehend vom Ergebnis dieser Zählung.

3. Verfahren nach Anspruch 2, bei dem die Berechnung dieses Ähnlichkeitswerts enthält:
• die Inkrementierung eines diesem Wertebereich zugeordneten Zählers um einen ersten vorbestimmten Schritt jedes Mal dann, wenn eine Abweichung zwischen den Paaren von Zeitpunkten (Ti; TREFkj) in diesen Bereich fällt, und
• die Inkrementierung des gleichen Zählers um einen zweiten vorbestimmten Schritt jedes Mal dann, wenn eine Abweichung zwischen den Paaren von Zeitpunkten (Ti; TREFkj) in einen benachbarten Wertebereich fällt, wobei dieser zweite vorbestimmte Schritt geringer als der erste vorbestimmte Schritt ist.

4. Verfahren nach einem der vorhergehenden Ansprüche, bei dem das Verfahren enthält:
• die Berechnung (96) des Ähnlichkeitswerts für alle möglichen Zeitverzögerungen, und
• die Erstellung (102) eines globalen Ankunftszeitpunkts TOAG für den Datenwert Sk ausgehend von der Zeitverzögerung, für die der berechnete Ähnlichkeitswert am höchsten ist.

5. Verfahren nach Anspruch 4, bei dem das Verfahren die Bestimmung (110) des Abstands zwischen dem Sender und dem Empfänger oder der Position des Senders bezüglich des Empfängers des empfangenen Signals ausgehend außerdem vom erstellten Zeitpunkt TOAG enthält.

6. Verfahren nach Anspruch 4, bei dem das Verfahren die Decodierung (108) eines codierten Datenwerts Dt im empfangenen Signal ausgehend von den erstellten aufeinanderfolgenden Zeitpunkten TOAG enthält.

7. Verfahren nach einem der vorhergehenden Ansprüche, bei dem der Datenwert Sk eine Kennung des Senders des empfangenen Signal ist.

8. Verfahren nach einem der vorhergehenden Ansprüche, bei dem der Aufbau der Folge {T1; ...; Ti; ...; TN} enthält:
• die Berechnung (86) eines Gleichartigkeitswerts zwischen Tastproben des empfangenen Signals und einem vorbestimmten Block mehrerer Impulse,
• die Erzeugung (88) eines neuen Zeitpunkts Ti, der den Moment anzeigt, in dem dieser Gleichartigkeitswert einen vorbestimmten Schwellwert überschritten hat.

9. Verfahren nach Anspruch 8, bei dem das Verfahren enthält:
• die Berechnung mehrerer Gleichartigkeitswerte zwischen den letzten Tastproben des empfangenen Signals und vorbestimmten Blöcken mehrerer Impulse, wobei jeder vorbestimmte Block einen jeweiligen Datenwert Db codiert, und
• die Übertragung des Datenwerts Db an eine Verarbeitungseinheit dieses Datenwerts jedes Mal dann, wenn der diesem Datenwert zugeordnete Gleichartigkeitswert einen vorbestimmten Schwellwert überschreitet.

10. Verfahren nach einem der vorhergehenden Ansprüche, bei dem das Verfahren die Filterung des empfangenen Signals in Abhängigkeit von dem identifizierten Datenwert Sk enthält, um Störimpulse oder Blöcke von Störimpulsen zu eliminieren, die den Datenwert Sk nicht codieren.

11. Empfänger eines Signals, das einen von einer PPM-Modulation (Pulse Position Modulation) codierten Datenwert Sk enthält, **dadurch gekennzeichnet, dass** dieser Empfänger enthält:
- einen Konstruktor (16; 128; 147) einer chronologischen Folge {T1; ...; Ti; ...; TN} von Ankunftszeitpunkten Ti von aufeinanderfolgenden Impulsen oder Impulsblöcken, die im empfangenen Signal enthalten sind,
- einen Rechner (26, 130), der fähig ist:
• einen Ähnlichkeitswert zwischen dieser Folge {T1; ...; Ti; ...; TN} und einer vorbestimmten chronologischen Sequenz {TREFk1; ...; TREFkj; ...;TREFkM} von Ankunftszeitpunkten, die den Datenwert Sk codieren, für mehrere Zeitverzögerungen Ol zwischen der Folge {T1; ...; Ti; ...; TN} und der Sequenz {TREFk1; ...; TREFkj; ...; TREFkM} zu konstruieren, wobei jeder Ähnlichkeitswert ausgehend von den Abweichungen zwischen den Paaren von Zeitpunkten (Ti; TREFkj) so erstellt wird, dass er für die Korrelation zwischen der Folge {T1; ...; Ti; ...; TN} und der Sequenz {TREFk1; ...; TREFkj; ...; TREFkM} für eine gegebene Zeitverzögerung Ol repräsentativ ist,
• den Datenwert Sk in der Folge {T1; ...; Ti; ...; TN} zu identifizieren, wenn der für eine der Zeitverzögerungen Ol berechnete Ähnlichkeitswert einen vorbestimmten Schwellwert überschreitet.
